# EUROPEAN PATENT APPLICATION

(11) **EP 2 093 947 A1**
(43) Date of publication of application: **26.08.2009**
(21) Application number: 07859785.3
(22) Date of filing: 12.12.2007
(51) Int. Cl.: H04L 12/56

(54) **TELECOMMUNICATION NETWORK, NETWORK NODE DEVICE, AND ROUTING METHOD**

(30) Priority: 13.12.2006 JP 2006335204
(71) Applicant: NEC Corporation, Minato-ku Tokyo 108-8001 (JP)
(72) Inventor: SHIOTA, Yoshiaki, Tokyo 108-8001 (JP); MANABE, Hisashi, Tokyo 108-8001 (JP)
(74) Representative: Glawe, Delfs, Moll
(86) International application number: PCT/JP2007/073962
(87) International publication number: WO 2008/072667

(57) **Abstract**

There is provided a network node device capable of selecting a route without causing an increase in the size and complexity of the information management system. Input lines (11-1 to 11-m) receive a data packet and transfer the received data packet to routing switching unit (12). Routing switching unit (12) extracts a character code address from the data packet received from input lines (11-1 to 11-m), uses this character code address as an identifier to search routing table (14), and determines an output line from output lines (13-1 to 13-n). Routing switching unit (12) transmits the received data packet through the determined output line.

## Description

### Technical Field

The present invention relates to a telecommunication network configured by connecting a plurality of network node devices to each other, and more particularly, a technique of selecting a route in a network node device.

### Background Art

In a telephone network such as a public network, connection control is conducted using a telephone number which is a decimal. In the connection control, a network node device employs a telephone number as a destination identifier to perform a routing process of selecting a route. Meanwhile, in an internet protocol (IP) packet network of the internet, a node device performs a routing process by using a binary numeral IP address as a destination identifier. In the routing process, reference is made to routing information (address information of a network layer) which includes route information such as an interface number or address of a destination node device and which corresponds to the destination identifier.

Generally, in the internet, a user designates a character code (alphanumeric, etc.) indicating a domain name as a destination. In the routing process, an IP address corresponding to the character code (domain name) is acquired and the acquired IP address is used as a destination identifier. In this way, since the character code indicating the domain name is converted into the IP address, the character code is a destination identifier of 'indirect' routing information.

Concepts and facilities of domain names in the internet have been specified by an internet engineering task force (IETF) which is an organization for standardizing techniques used in the internet ("DOMAIN NAMES-CONCEPTS AND FACILITIES", RFC1034, November, 1987).

In addition, a technique of using an IP address as a destination identifier has been specified by the IETF ("Requirements for IP Version 4 Routers", RFC1812, June 1995).

A function of converting a domain name into an IP address is called a domain name service (DNS). In a case where a far-end identifier designated by a user is a domain name address, since the domain name address cannot be transmitted in an IP network as is, it is necessary to acquire an IP address corresponding to the domain name address. In the internet, the DNS is used to convert a domain name address represented by character into an IP address.

Moreover, as a routing system using the DNS, there is a routing system for exclusive use which searches a conversion database (DB) so as to convert a far-end uniform resource locator (URL) address into an IP address before routing is preformed.

Further, as an apparatus for performing route selection based on an IP address, there is a routing table searching apparatus disclosed in Japanese Patent Laid-Open No. 11-088427.

### DISCLOSURE OF THE INVENTION

A character string such as a domain name has its own meaning. Therefore, in a case where a destination is designated by the domain name, convenience of a user can be improved in dealing with information of the destination. For example, the user can easily record and remember the information of the destination.

However, in the aforementioned related technique, a character code address indicating a domain name is converted into an IP address (numeric code address) by means of the DNS, and a routing process is carried out on the basis of the IP address. Accordingly, a system which converts the character code address into the numeric code address or a system which manages routing information using the two kinds of codes is required. Building such systems on a telecommunication network results in a large-scale complicated communication system.

An exemplary object of the present invention is to provide a telecommunication network, a network node device and a routing method capable of solving the foregoing problem and selecting a route without requiring a large-scale complicated communication system.

In order to accomplish the above object, according to the present invention, there is a telecommunication network which includes a plurality of network nodes, wherein each of the plurality of network nodes comprises route selection means for directly using a character code that designates a terminal reception point to select a route from its own network node to the terminal reception point.

According to the present invention, there is a network node device constituting a telecommunication network with another network node, the network node device comprising route selection means for directly using a character code that designates a terminal reception point to select a route from its own network node to the final reception point.

According to the present invention, there is a routing method of a network node device constituting a telecommunication network with another network node, the routing method comprising directly using a character code that designates the terminal reception point to select a route from its own network node to a terminal reception point.

According to the present invention, there is provided a data communication method which includes: receiving electronic data that includes a character code that designates a terminal reception point from another communication device; using, as a search identifier, the character code of the received electronic data whose format is not converted to search a routing table where identification information of a plurality of output lines is stored corresponding to character codes that indicate terminal reception points of the respective output lines; and transmitting the received electronic data through the output line determined on the basis of the search result.

That is, according to the present invention, in order to implement a routing method without performing numeric conversion, a character code is directly used to carry out a routing process in each node of the network. Therefore, in the present invention, each node is provided with a table in which searches can be performed based on the character code. As a result, according to the present invention, a routing (a route selection) can be directly performed based on character code information without performing numeric conversion of the character code by the DNS.

### BRIEF DESCRIPTION OF THE DRAWINGS

FIG. 1 is a block view illustrating the configuration of a telecommunication network according to a first exemplary embodiment of the present invention;
FIG. 2 is a block view illustrating the construction of a network node of FIG. 1;
FIG. 3 is a view illustrating a construction example of a routing table of FIG. 2;
FIG. 4 is a flowchart showing the order of the routing process performed in the telecommunication network according to the first exemplary embodiment of the present invention;
FIG. 5 is a block view illustrating the construction of a network node according to a second exemplary embodiment of the present invention;
FIG. 6 is a view illustrating a construction example of a binary numeral routing table of FIG. 5;
FIG. 7 is a flowchart showing the order of the routing process performed in a telecommunication network according to the second exemplary embodiment of the present invention; and
FIG. 8 is a block view illustrating the configuration of a telecommunication network according to a third exemplary embodiment of the present invention.

### DESCRIPTION REFERENCE NUMERALS

- 1, 1-1 to 1-7, 1-o to 1-r, 2: Network nodes
- 11-1 to 11-m: Input lines
- 12, 21: Routing switching unit
- 13-1 to 13-n: Output lines
- 14: Routing table
- 22: Binary numeral routing table
- 100: Telecommunication network

### BEST MODE FOR CARRYING OUT THE INVENTION

Hereinafter, exemplary embodiments of the present invention will be explained with reference to the accompanying drawings.

### [First Exemplary Embodiment]

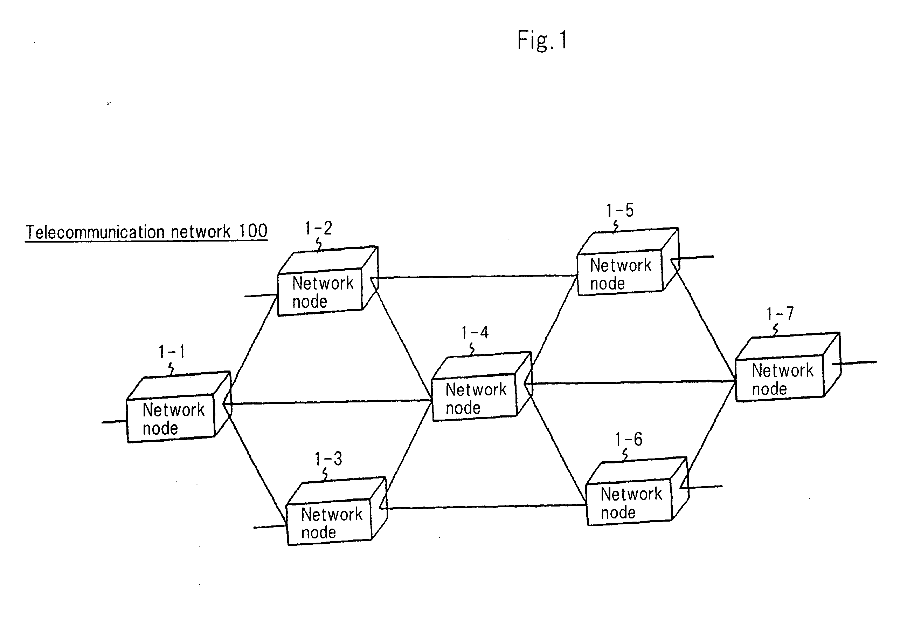

FIG. 1 is a block view illustrating the configuration of a telecommunication network according to a first exemplary embodiment of the present invention. In FIG. 1, telecommunication network 100 includes plurality of network nodes 1-1 to 1-7 connected to each other. The number and connection form of the network nodes can be appropriately changed.

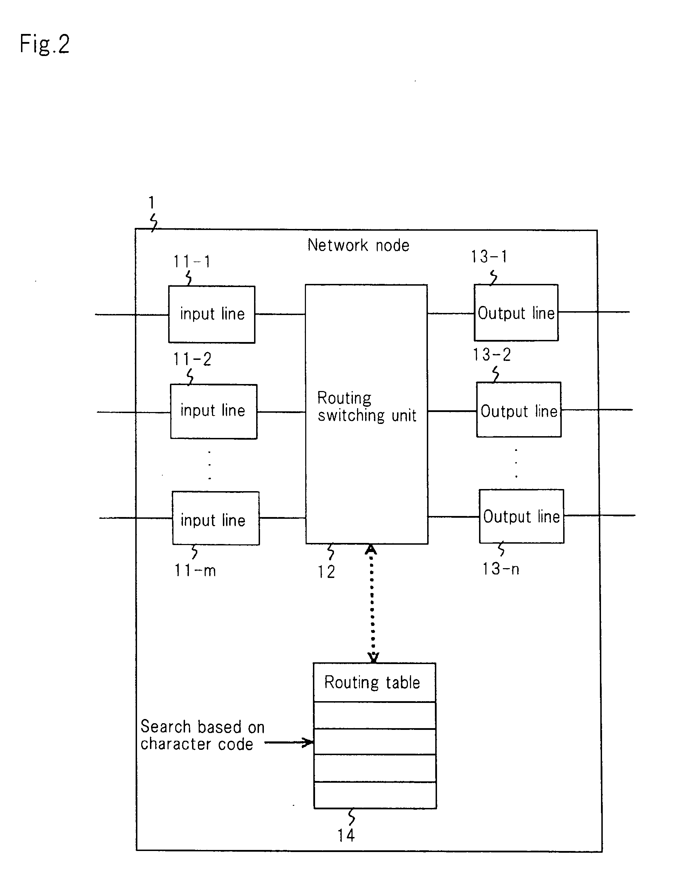

Network nodes 1-1 to 1-7 are identical in construction. FIG. 2 shows the construction of a network node used as network nodes 1-1 to 1-7.

Referring to FIG. 2, network node 1 includes input lines 11-1 to 11-m, routing switching unit 12, output lines 13-1 to 13-n, and routing table 14.

Each of input lines 11-1 to 11-m receives a data packet from a network node which is a connection destination of the input line, and transfers the received data packet to routing switching unit 12. A character code address, which is information regarding designating a terminal reception point, is stored in a header portion of the data packet as a destination identifier. Here, the character code is represented by an American standard code for information interchange (ASCII) that is one of the coding schemes. Designation of the terminal reception point includes designation of a point, designation of equipment and designation of a person in addition to the designation of a domain name.

The character code address may have a fixed or variable code length. However, a maximum code length is restricted by the header size of the data packet. For example, the maximum code length is 100 bytes. In a case where the character code address is stored in the header portion of the data packet, a code indicating the end of the character code address (a code below ASCII) is inserted after the character code address. For instance, in a case where the character code address is 80 bytes, the code indicating the end of the character code address is inserted after 81 bytes. Detecting this code makes it possible to identify the character code address in the header information of the data packet.

When routing switching unit 12 receives a data packet from any one of input lines 11-1 to 11-m, routing switching unit 12 searches routing table 14 by using a character code address stored in the header portion of the received data packet as a search identifier. Routing table 14 stores information showing the association between the search identifiers (character code addresses) and output lines 13-1 to 13-n. Routing switching unit 12 determines an output line from among output lines 13-1 to 13-n on the basis of the search result, and outputs the received data packet to the determined output line.

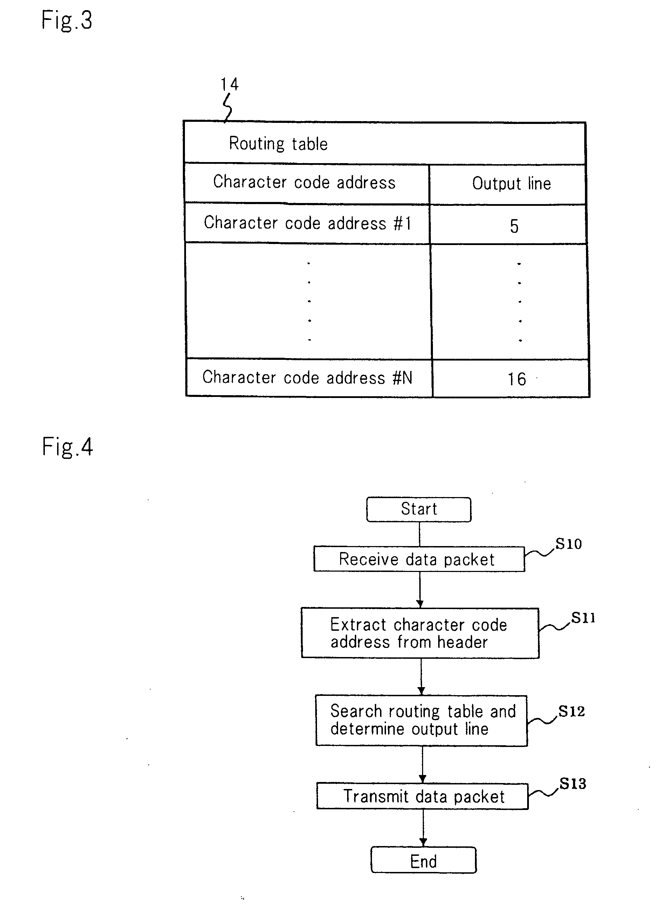

FIG. 3 is a view illustrating a construction example of routing table 14 of FIG. 2. In FIG. 3, routing table 14 accumulates matching information of character code addresses #1 to #N and output lines 5 to 16 corresponding thereto. Exemplary searching methods using routing table 14 include the following first to third searching methods.

The first searching method compares the character code addresses of routing table 14 entry by entry, starting from the first one, until the matched one is found.

The second searching method uses a hash function. Concretely, when a search character code is applied to the hash function, 'a position' of a character code address in routing table 14 is expressed as the return value of the hash function. The routing table is read using the return value, to determine an output line.

The third searching method positions routing table 14 in a content addressable memory (CAM), and supplies a search character code address to the CAM, so that the CAM can output an output line.

Each of network nodes 1-1 to 1-7 is provided with routing table 14 that stores the matching information of the search identifiers and the output lines as shown in FIG. 3. Routing tables 14 are provided in respective network nodes 1-1 to 1-7, corresponding to the input lines.

Hereinafter, an operation (routing process) of each of network nodes 1-1 to 1-7 in telecommunication network 100 of this exemplary embodiment will be explained.

FIG. 4 is a flowchart showing the order of the routing process. Referring to FIG. 4, routing switching unit 12 receives a data packet from any one of input lines 11-1 to 11-m (step S10). When receiving the data packet, routing switching unit 12 extracts a character code address from the header portion of the received data packet (step S11).

Thereafter, routing switching unit 12 acquires output line information by searching routing table 14 by using the character code address as a search identifier, and determines an output line from among output lines 13-1 to 13-n (step S12) to transmit the received data packet. Then, routing switching unit 12 transmits the received data packet through the determined output line (step S13).

The foregoing routing process is performed in all the nodes on the route including a terminal destination node.

As described above, according to the telecommunication network of this exemplary embodiment, since a character code address (character code information) designating a terminal reception point as a destination is directly used as routing information, a process of converting character code information into numeric code information such as the DNS is not necessary. Therefore, since only the character code information is managed as routing information and since the numeric code information does not need not to be managed, a communication system can be reduced in scale and the system configuration can be simplified.

Meanwhile, each of network nodes 1-1 to 1-7 exchanges information necessary for the routing using the character codes between its own node and the other node, to update and manage routing tables 14.

### [Second Exemplary Embodiment]

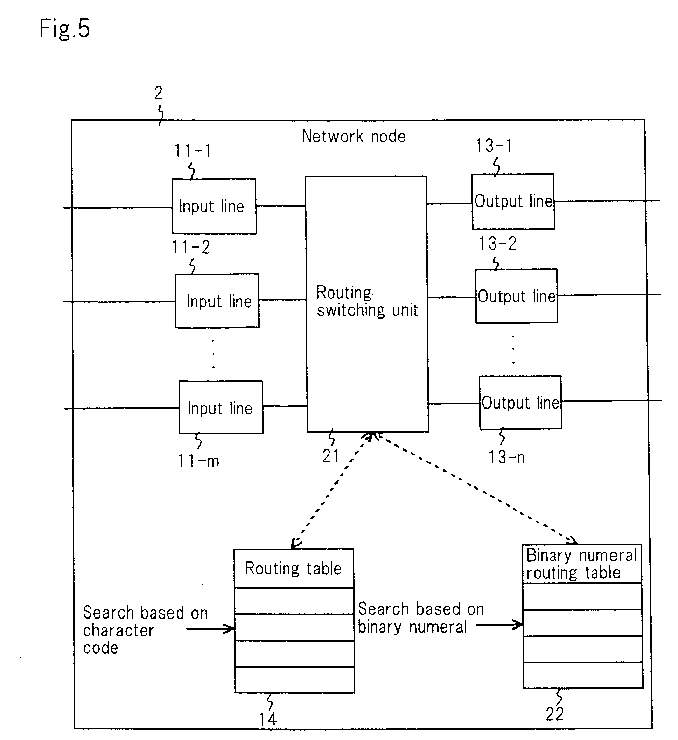

FIG. 5 is a block view illustrating the construction of a network node that constitutes a telecommunication network according to a second exemplary embodiment of the present invention.

Network node 2 shown in FIG. 5 is identical in construction to network node 1 shown in FIG. 2 except that routing switching unit 21 can search routing table 14 and binary numeral routing table 22. The same reference numerals are used for the same components in FIGS. 2 and 5.

Concretely, network node 2 includes input lines 11-1 to 11-m, routing table 14, binary numeral routing table 22, routing switching unit 21, and output lines 13-1 to 13-n. When routing switching unit 21 receives a data packet through any one of input lines 11-1 to 11-m, routing switching unit 21 performs a search process in which routing table 14 is searched based on a character code or a search process in which binary numeral routing table 22 is searched based on a numeric code, and determines an output line from among output lines 13-1 to 13-n.

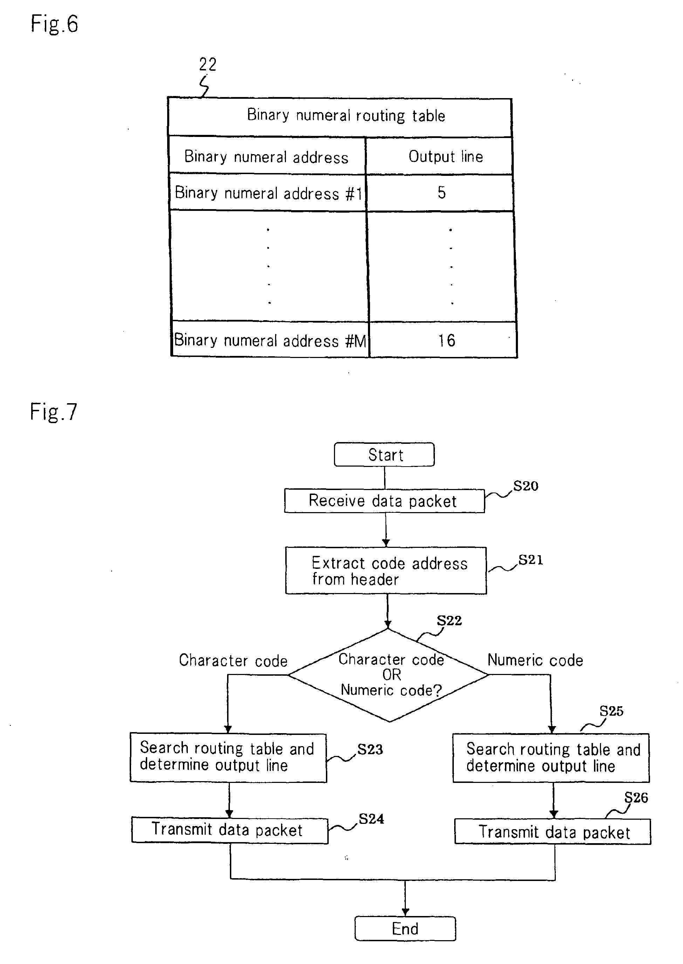

FIG. 6 is a view illustrating a construction example of binary numeral routing table 22 of FIG. 5. Referring to FIG. 6, routing table 22 accumulates matching information of binary numeral addresses #1 to #N and output lines 5 to 16 corresponding thereto.

The telecommunication network of this exemplary embodiment includes plurality of network nodes 1-1 to 1-7 connected to each other like telecommunication network 100 of FIG. 1. Network nodes 1-1 to 1-7 are identical in construction to network node 2 of FIG. 5. The number and connection form of the network nodes can be appropriately changed.

Hereinafter, an operation (routing process) of each network node 1-1 to 1-7 in the telecommunication network of this exemplary embodiment will be explained.

FIG. 7 is a flowchart showing the order of the routing process. Referring to FIG. 7, routing switching unit 21 receives a data packet from any one of input lines 11-1 to 11-m (step S20). When receiving the data packet, routing switching unit 21 extracts a code address from the header portion of the received data packet (step S21), and examines whether the code address is a routing based on a character code or a routing based on a numeric code (step S22).

In a case where it is judged that the code address is the routing based on the character code, routing switching unit 21 searches routing table 14 by using the character code address as a search identifier to acquire output line information, and determines an output line from among output lines 13-1 to 13-n to transmit the received data packet (step S23). Then, routing switching unit 21 transmits the received data packet through the determined output line (step S24).

In a case where it is judged that the code address is the routing based on the numeric code, routing switching unit 21 searches routing table 22 by using the numeric code address as a search identifier to acquire output line information, and determines an output line from among output lines 13-1 to 13-n to transmit the received data packet (step S25). Then, routing switching unit 21 transmits the received data packet through the determined output line (step S26).

The foregoing routing process is performed in all the nodes on the route including a terminal destination node.

As set forth above, according to the telecommunication network of this exemplary embodiment, it is possible to handle general routing based on a numeric code in addition to a routing based on a character code. Therefore, in addition to the effects explained in the first exemplary embodiment, the telecommunication network of this exemplary embodiment is easily applicable to a general telecommunication network where only the routing based on the numeric code is carried out. Moreover, the general telecommunication network can be easily changed into the telecommunication network of this exemplary embodiment.

### [Third Exemplary Embodiment]

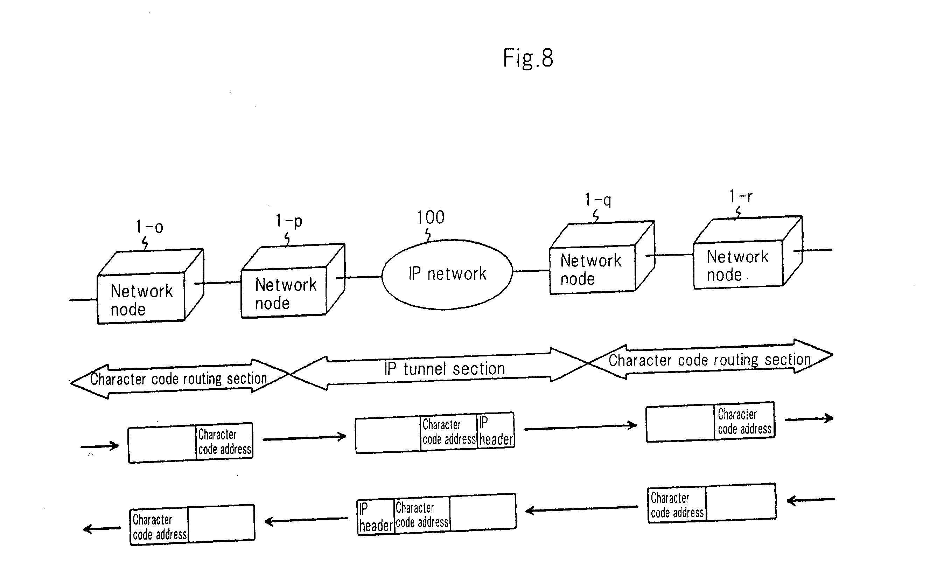

FIG. 8 is a block view illustrating the configuration of a telecommunication network according to a third exemplary embodiment of the present invention.

Referring to FIG. 8, the telecommunication network of this exemplary embodiment includes a first telecommunication network composed of nodes 1-o and 1-p connected to each other, and a second telecommunication network composed of nodes 1-q and 1-r connected to each other. The first and second telecommunication networks are connected to each other through IP network 100 which is a relay section. Meanwhile, in the first and second telecommunication networks, the number and connection form of the network nodes can be appropriately changed.

Nodes 1-o to 1-r are capable of performing a routing process based on a character code address. Nodes 1-o and 1-r are identical in construction to network node 1 of FIG. 2 or network node 2 of FIG. 5.

Nodes 1-p and 1-q are basically identical in construction to nodes 1-o and 1-r, but part of the routing process of Nodes 1-p and 1-q is different from that of nodes 1-o and 1-r. The routing tables provided in nodes 1-p and 1-q are tables in which information of an IP address given to a header is added to output line information in the routing tables as shown in FIG.3. Concretely, nodes 1-p and 1-q include a routing table that stores information showing the association between the character code addresses, output lines and IP addresses.

In the telecommunication network of this exemplary embodiment, the routing process explained in the first or second exemplary embodiment is carried out between nodes 1-o and 1-p and between nodes 1-q and 1-r in the first and second telecommunication networks.

IP network 100 is interposed in a section between nodes 1-p and 1-q. In this section, a routing switching unit performs the following routing process in nodes 1-p and 1-q.

In a case where the routing switching unit receives data packet P1 from another node, the routing switching unit acquires output line information and an IP address by searching the routing table by using a character code address of the header portion of received data packet P1 as a search identifier. Thereafter, the routing switching unit determines an output line on the basis of the acquired output line information, creates new data packet P2 containing the contents of received data packet P1, and records the acquired IP address in a header portion thereof. And, the routing switching unit transmits newly-created data packet P2 to IP network side 100 through the determined output line.

Meanwhile, in a case where the routing switching unit receives data packet P2 from IP network 100, the routing switching unit extracts a character code address of the header portion of data packet P1 stored in a data portion of received data packet P2. Thereafter, the routing switching unit acquires output line information by searching the routing table by using the character code address as a search identifier. And, the routing switching unit determines an output line on the basis of the acquired output line information, and transmits data packet P1 through the determined output line.

According to the telecommunication network of the exemplary embodiment described above, in addition to the effects explained in the first exemplary embodiment, a routing based on a character code is applicable to the telecommunication network where the IP network is interposed.

### [Another Exemplary Embodiment]

The routing process in the first to third exemplary embodiments described above is applicable to a data communication method for a communication system in which electronic data such as character data, voice data and image data are transmitted from a source communication device to a destination communication device.

Concretely, in the data communication method, the process, in which electronic data containing a character code designating a terminal reception point is received from another communication device, the character code of the received electronic data is used as a search identifier without converting a format to search a routing table where identification information regarding a plurality of output lines is stored corresponding to character codes indicating terminal reception points of the respective output lines, and the received electronic data is transmitted through the output line determined on the basis of the search result, is carried out.

In the above case, the received electronic data to be transmitted may contain the character code whose format is not converted.

In the respective exemplary embodiments described above, in the designation of the terminal reception point, a telephone number may be used to designate a person. Here, the telephone number is used as a character code designating a final receiver (call receiver).

As discussed earlier, according to the present invention, it is possible to perform a routing (to select a route) directly based upon character code information, without converting a character code into a numeric code (IP address) by the DNS. According to routing that uses the character code information, since only character code information is managed as routing information and since numeric code information does not need to be managed, a communication system can be reduced in scale and the system configuration can be simplified.

In addition, since the numeric code information needs not to be managed, the amount of routing information to be managed is reduced, so that routing memory space can be saved. As a result, address management costs can be cut down.

Moreover, besides the foregoing effects, the telecommunication network of the present invention where, both routing based on a character code and routing based on a numeric code can be carried out, is easily applicable to a general telecommunication network where only routing basend on a numeric code is carried out. Further, the general telecommunication network can be easily changed into the telecommunication network of this exemplary embodiment.

This application claims priority based on Japanese Patent Application No. 2006-335204 filed on December 13, 2006, the entire contents of which are incorporated herein by reference.

### Industrial Applicability

The present invention is applicable to a next-generation integrated telecommunication network (telephone network, mobile network, internet, etc.).

## Claims

1. A telecommunication network, composing a plurality of network nodes,
wherein each of said plurality of network nodes comprises route selection means for directly using a character code that designates a terminal reception point to select a route from its own network node to the terminal reception point.

2. The telecommunication network according to claim 1, wherein said character code is a fixed length code or a variable length code.

3. The telecommunication network according to claim 1 or 2, wherein said route selection means comprises:
a routing table where identification information of a plurality of output lines is stored corresponding to character codes which indicate terminal reception points of the respective output lines; and
a routing switching unit that receives data that includes a character code which is a destination, searches said routing table on the basis of the character code of the received data, determines an output line from among said plurality of output lines to transmit the received data, and transmits the received data through the determined output line.

4. The telecommunication network according to claim 3, wherein the identification information of said plurality of output lines is stored in said routing table with numeric codes that indicate the terminal reception points of the respective output lines, and wherein said routing switching unit generates a packet where the numeric code which is given to the identification information of the determined output line is stored in a header portion, stores the received data in the packet, and transmits the packet.

5. The telecommunication network according to claim 1, wherein said route selection means uses a numeric code which is different from the character code and which designates the terminal reception point, except for the route selection in which the character code is used, to select a route from its own network node to the terminal reception point.

6. A network node device constituting a telecommunication network with another network node, said network node device comprising route selection means for directly using a character code that designates a terminal reception point to select a route from its own network node to the terminal reception point.

7. The network node device according to claim 6, wherein the character code is a fixed length code or a variable length code.

8. The network node device according to claim 5 or 6, wherein said route selection means comprises:
a routing table where identification information of a plurality of output lines is stored corresponding to character codes that indicate terminal reception points of the respective output lines; and
a routing switching unit that receives a data that includes a character code which is a destination, searches said routing table on the basis of the character code of the received data, determines an output line from among said plurality of output lines to transmit the received data, and transmits the received data through the determined output line.

9. The network node device according to claim 8, wherein the identification information of said plurality of output lines is stored in said routing table with numeric codes that indicate the terminal reception points of the respective output lines, and wherein said routing switching unit generates a packet where the numeric code which is given to the identification information of the determined output line is stored in a header portion, stores the received data in the packet, and transmits the packet.

10. The network node device according to claim 6, wherein said route selection means uses a numeric code which is different from the character code and which designates the terminal reception point, except for the route selection in which the character code is used, to select a route from its own network node to the terminal reception point.

11. A routing method carried out in a network node device which constitutes a telecommunication network with another network node, said routing method comprising directly using a character code that designates the terminal reception point to select a route from its own network node to a terminal reception point.

12. The routing method according to claim 11, wherein the character code is a fixed length code or a variable length code.

13. The routing method according to claim 11 or 12, which uses a numeric code which is different from the character code and which designates the terminal reception point, except for the route selection using the character code, to select a route from its own network node to the terminal reception point.

14. A data communication method, comprising : receiving electronic data that includes a character code that designates a terminal reception point from another communication device; using, as a search identifier, the character code of the received electronic data whose format is not converted to search a routing table where identification information of a plurality of output lines is stored corresponding to character codes that indicate terminal reception points of the respective output lines; and transmitting the received electronic data through the output line determined on the basis of the search result.

15. The data communication method according to claim 14, wherein the received electronic data which is to be transmitted includes the character code whose format is not converted.
